# FASCICULE DE BREVET EUROPEEN

(11) **EP 3 800 089 B1**
(45) Date de publication et mention de la délivrance du brevet: **17.08.2022**
(21) Numéro de dépôt: 20197490.4
(22) Date de dépôt: 22.09.2020
(51) Int. Cl.: B60N 3/00, B60N 2/20, B60N 2/75, B60N 3/10, B60R 11/02

(54) **SIÈGE DE VÉHICULE DOTÉ D'UN DOSSIER RABATTABLE APTE À SUPPORTER UN OBJET**
FAHRZEUGSITZ MIT EINER ZUSAMMENKLAPPBAREN RÜCKENLEHNE, DIE IN DER LAGE IST, EINEN GEGENSTAND ZU TRAGEN
VEHICLE SEAT PROVIDED WITH A FOLDING BACKREST CAPABLE OF SUPPORTING AN OBJECT

(30) Priorité: 03.10.2019 FR 1910959
(43) Date de publication de la demande: 07.04.2021
(73) Titulaire: Renault s.a.s, 92100 Boulogne Billancourt (FR)
(72) Inventeur: CAFFARI, SERGE, 78290 CROISSY SUR SEINE (FR)
(74) Mandataire: Renault Group

(56) Documents cités:
- DE-A1- 19 854 985
- FR-A1- 2 982 548
- FR-A1- 3 009 811
- US-A1- 2014 191 005
- US-A1- 2018 178 700

## Description

La présente invention concerne un siège de véhicule doté d'un dossier rabattable apte à supporter un objet.

Afin de bien comprendre le positionnement des différentes pièces impliquées dans un véhicule selon l'invention, la description est réalisée en faisant référence à un repère orthonormé direct XYZ dans lequel X est un axe longitudinal avantarrière du véhicule orienté vers l'arrière, Y est un axe transversal orienté vers la droite du véhicule et Z est un axe vertical dirigé vers le haut.

Certains sièges de véhicule possèdent une assise et un dossier rabattable apte à passer d'une position fonctionnelle pour laquelle il sert de maintien pour le dos d'une personne qui serait assise sur ledit siège, à une position repliée pour laquelle il s'étend parallèlement à l'assise. Dans la position repliée, le dossier présente une face supérieure sensiblement horizontale, qui peut directement servir de support à un objet ou peut accueillir des moyens de maintien aptes à supporter un objet. Ces moyens peuvent par exemple comprendre une tablette support, un clapet de maintien précontraint, une béquille, etc.

La demande US6220660 présente un siège possédant un dossier rabattable entre une position fonctionnelle et une position repliée. Dans la position repliée, le dossier présente un plateau support apte à être surélevé, puis à être séparé en deux parties pouvant servir de tablettes support.

La demande US 2018/178700 A1 présente un autre siège avec un dossier rabattable et deux tablettes support.

La demande FR 3 009 811 A1 présente un siège avec une tablette comportant une rainure pour recevoir un bord inférieur d'un écran d'affichage nomade.

Un siège selon l'invention présente un dossier rabattable pouvant occuper une position repliée pour laquelle il met en œuvre des moyens aptes à supporter de façon stable, des objets de dimensions importantes, tels que par exemple des tablettes électroniques ou des smartphones.

L'invention a pour objet un siège de véhicule comprenant une assise et un dossier rabattable entre une position fonctionnelle pour laquelle il va servir de maintien au dos d'un occupant qui serait assis sur ledit siège et une position repliée pour laquelle il s'étend dans une direction parallèle à l'assise, ledit dossier présentant lorsqu'il est dans la position repliée une face supérieure sur laquelle sont solidarisées deux tablettes support mobiles, les tablettes étant aptes à passer d'une position rentrée pour laquelle elles reposent sur la face supérieure du dossier, à une position déployée pour laquelle elles se retrouvent côte à côte et saillent vers l'avant de ladite face.

Selon l'invention, chaque tablette présente au moins une rainure et lesdites rainures se retrouvant alignées l'une par rapport à l'autre lorsque les tablettes sont dans la position déployée pour former un support de grande dimension. Le principe d'un siège selon l'invention est de pouvoir déployer deux tablettes support montées dans le dossier et ayant chacune une rainure, de manière à pouvoir aligner les deux rainures des deux tablettes et constituer un support plus long. En effet, l'avantage de pouvoir aligner les deux rainures est de constituer une rainure résultante plus longue, apte à supporter avec une meilleure stabilité des objets de grandes dimensions, tels que par exemple des smartphones ou des tablettes électroniques. Il est supposé que chaque rainure est traversante sur la tablette qui la porte, de manière à rendre possible l'insertion d'un objet continu dans les deux rainures alignées. La rainure présente un profil donné, conçu pour maintenir un objet dans une position donnée, pouvant être verticale ou inclinée. Avantageusement, chaque tablette possède deux rainures aptes à supporter un objet avec une inclinaison différente. De cette manière, un siège selon l'invention va permettre de mettre en continuité deux rainures aptes à maintenir un objet avec la même inclinaison et va donc proposer deux possibilités de maintien de l'objet avec une inclinaison différente. Les tablettes peuvent se déployer par rotation ou par translation. Avantageusement, quand les tablettes sont dans la position rentrée, elles ne débordent pas de la face supérieure du dossier et ne créent donc aucun encombrement supplémentaire. La notion de « face supérieure » n'a de sens que si le dossier est dans la position repliée sur l'assise. Lorsque le dossier est replié sur l'assise, il peut venir ou non au contact de ladite assise.

Selon une caractéristique possible de l'invention, lorsque les tablettes sont dans la position déployée, les deux rainures sont alignées le long du même axe. De cette manière, elles ne créent aucune zone de chevauchement et créent une rainure résultante orientée suivant le même axe.

Selon une caractéristique possible de l'invention, les deux rainures sont séparées l'une de l'autre par un espace libre. Pour cette configuration, les deux tablettes ménagent entre elles un espace libre lorsqu'elles sont dans la position déployée, créant une discontinuité au niveau de la rainure résultante. La présence de cet espace libre contribue à accroitre la longueur de la rainure résultante.

Selon une caractéristique possible de l'invention, chacune des deux tablettes est montée pivotante autour d'un axe solidarisé à la face supérieure du dossier. Il est à préciser que les deux tablettes peuvent pivoter autour d'un axe de rotation commun, ou peuvent posséder chacune leur propre axe de rotation.

Selon une caractéristique possible de l'invention, chaque tablette est montée pivotante autour de son propre axe de rotation, lesdits axes de rotation étant parallèles et verticaux. De cette manière les tablettes se déplacent majoritairement dans un plan horizontal.

Selon une caractéristique possible de l'invention, chaque rainure possède un profil évolutif, adapté à différentes épaisseurs d'objets susceptibles d'être insérés dans lesdites rainures. De cette manière, les rainures présentent un caractère universel, car peuvent soutenir une grande variabilité d'objets ayant des épaisseurs différentes. Avantageusement, le profil évolutif de chaque rainure présente une géométrie permettant de soutenir un objet avec une inclinaison variable.

Selon une caractéristique possible de l'invention, dans la position rentrée les deux tablettes sont superposées sur la face supérieure de manière à distinguer une tablette inférieure et une tablette supérieure, ladite tablette inférieure étant insérée entre la tablette supérieure et la face supérieure. En étant superposées l'une sur l'autre, les deux tablettes occupent un volume minimum qui n'accroit pas ou peu le volume du dossier.

Selon une caractéristique possible de l'invention, la tablette inférieure est dotée d'un mécanisme de levage lui permettant d'arriver à la même hauteur que la tablette supérieure lorsque lesdites deux tablettes se déploient pour parvenir à la position déployée. En effet, il est impératif que les deux tablettes soient à la même hauteur lorsqu'elles sont dans la position déployée, de façon à obtenir une rainure résultante continue et horizontale. La tablette inférieure qui est initialement située sous la tablette supérieure, doit donc s'élever pour atteindre la même hauteur que la tablette supérieure, cette élévation étant réalisée par un mécanisme de levage qui doit être activé entre la position rentrée et la position déployée.

Selon une caractéristique possible de l'invention, le mécanisme de levage comporte une rainure hélicoïdale appartenant à l'un des deux éléments constitués par la tablette inférieure et la face supérieure du dossier, et un ergot appartenant à l'autre élément, ledit ergot étant inséré dans la rainure. Pour cette configuration, le mécanisme de levage n'est pas activé de façon indépendante par rapport à la mise en rotation de la tablette inférieure, mais est naturellement activé par cette mise en rotation de la tablette grâce à l'ergot qui va suivre le profil de la fente hélicoïdale.

Selon une caractéristique possible de l'invention, chaque tablette possède un évidement apte à servir de porte-gobelet, ladite au moins une rainure étant placée devant ledit évidement lorsque la tablette est dans la position déployée. Le fait de déployer les deux tablettes va donc créer un porte-gobelet double avec deux évidements, ainsi qu'une rainure allongée prévue pour supporter des objets longs et fins de type smartphones ou tablettes. Pour une personne qui serait assise sur un siège placé à côté de l'accoudoir, le porte-gobelet ainsi crée sera directement à portée de main, tandis que la tablette électronique ou le smartphone sera plus éloigné et pourra être regardé avec plus de confort.

L'invention a pour autre objet un véhicule comprenant une banquette trois places convertible en deux sièges latéraux séparés par un accoudoir central. Selon l'invention, la banquette possède un siège central qui est conforme à l'invention, l'accoudoir central étant constitué par le dossier dudit siège central.

Un siège selon l'invention présente l'avantage de posséder une fonctionnalité supplémentaire à travers la mise en œuvre d'un support allongé sous la forme d'une rainure, tout en demeurant d'un encombrement et d'un poids constants par rapport aux sièges existants. Il a de plus l'avantage de posséder un dossier rabattable multifonctionnel pouvant à la fois supporter avec stabilité des objets allongés de type smartphones ou tablettes électroniques et jouer le rôle de porte-gobelet.

On donne ci-après une description détaillée d'un mode de réalisation préféré d'un siège selon l'invention en se référant aux figures suivantes :
[Fig. 1] représente une vue en perspective d'un siège selon l'invention, les deux tablettes support étant dans la position rentrée,
[Fig. 2] représente une vue en perspective d'un siège selon l'invention, les deux tablettes support étant dans la position déployée,
[Fig. 3] représente une vue en perspective d'un siège selon l'invention, les deux tablettes support étant dans la position déployée, une tablette électronique étant supportée par les deux tablettes support,
[Fig. 4] représente une vue schématique de côté d'un premier mécanisme de levage d'une tablette support d'un siège selon l'invention,
[Fig. 5] représente une vue schématique de côté d'un deuxième mécanisme de levage d'une tablette support d'un siège selon l'invention, ledit mécanisme étant désactivé,
[Fig. 6] représente une vue schématique de côté du deuxième mécanisme de levage de la figure 6, ledit mécanisme étant activé,
[Fig. 7] représente une vue du dessus des deux tablettes support d'un siège selon l'invention, lesdites tablettes étant dans la position rentrée,
[Fig. 8] représente une vue du dessus des deux tablettes support d'un siège selon l'invention, lesdites tablettes étant dans la position déployée.

Un véhicule 1 selon l'invention comprend une banquette 2 trois places, comprenant une assise 3 et un dossier 4. Le dossier 4 comporte une partie centrale 5 rabattable pouvant passer d'une position fonctionnelle pour laquelle il va servir de maintien au dos d'une personne qui serait assise au milieu de la banquette 2, à une position repliée pour laquelle il s'étend dans une direction parallèle à l'assise 3. Cette partie centrale 5 passe de la position fonctionnelle à la position repliée après avoir effectuée une rotation d'un angle généralement supérieur à 90°. La banquette 2 est apte à se transformer en deux sièges latéraux au moyen d'un pivotement de la partie centrale 5 jusqu'à atteindre la position repliée, ladite partie centrale 5 étant alors assimilable à un accoudoir central séparant lesdits deux sièges latéraux. Une personne assise dans chaque siège latéral va pouvoir bénéficier de cet accoudoir central qui est commun aux deux sièges. Il est supposé que cette partie centrale rabattable 5 constitue le dossier d'un siège 10 selon l'invention.

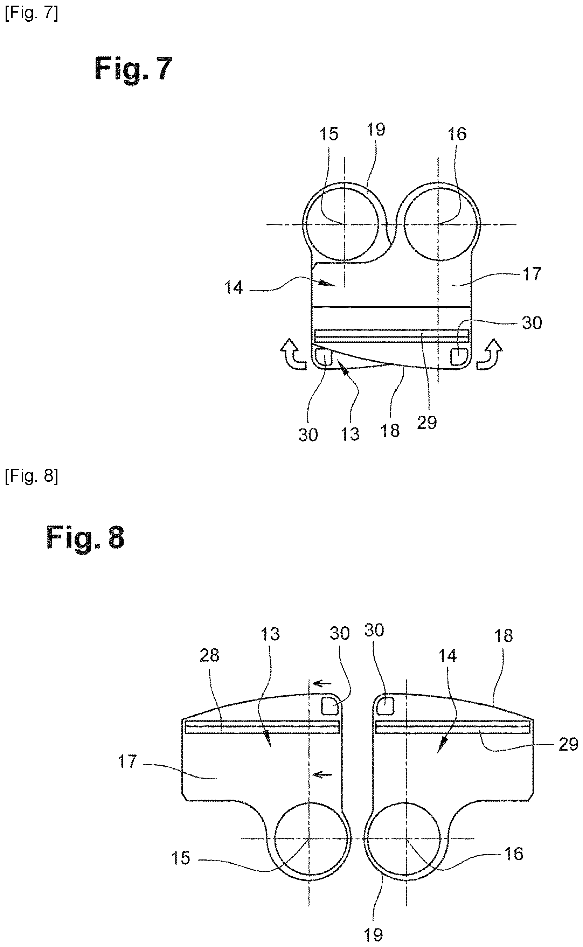

Lorsque la partie centrale 5 se retrouve dans la position repliée au-dessus de l'assise 3, elle présente une face supérieure 11 s'étendant dans un plan sensiblement horizontal si l'on se suppose que la banquette 2 repose sur un sol horizontal. Cette face supérieure 11 peut disposer dans une zone arrière d'un rangement 12 pouvant être obturé par un couvercle coulissant ou pivotant. Cette face supérieure 11 comprend deux tablettes support 13, 14 montées chacune pivotantes autour d'un axe vertical 15, 16, lesdites tablettes 13, 14 étant aptes à passer d'une position rentrée comme cela est illustré à la figure 7 et pour laquelle elles sont superposées et reposent sur la face supérieure 11 de l'accoudoir 5, à une position déployée pour laquelle elles saillent vers l'avant de la surface supérieure 11, comme cela est illustré à la figure 8. Chaque tablette 13, 14 comprend un corps plein 17 sensiblement plan et de forme rectangulaire, dont un bord 18 est arrondi et incliné. Le corps 17 est prolongé par une paroi cylindrique 19 dont l'axe de révolution est perpendiculaire au plan dudit corps 17. Cette paroi cylindrique 19 présentent deux extrémités alignées le long de son axe de révolution, dont l'une arase le plan du corps 17 et est ouverte, et dont l'autre est fermée au moyen d'une paroi circulaire plane et pleine. Il est à noter que le corps 17 de chaque tablette 13, 14 possède une empreinte 30 dans laquelle un utilisateur peut glisser un doigt afin de pouvoir déplacer ladite tablette 13, 14.

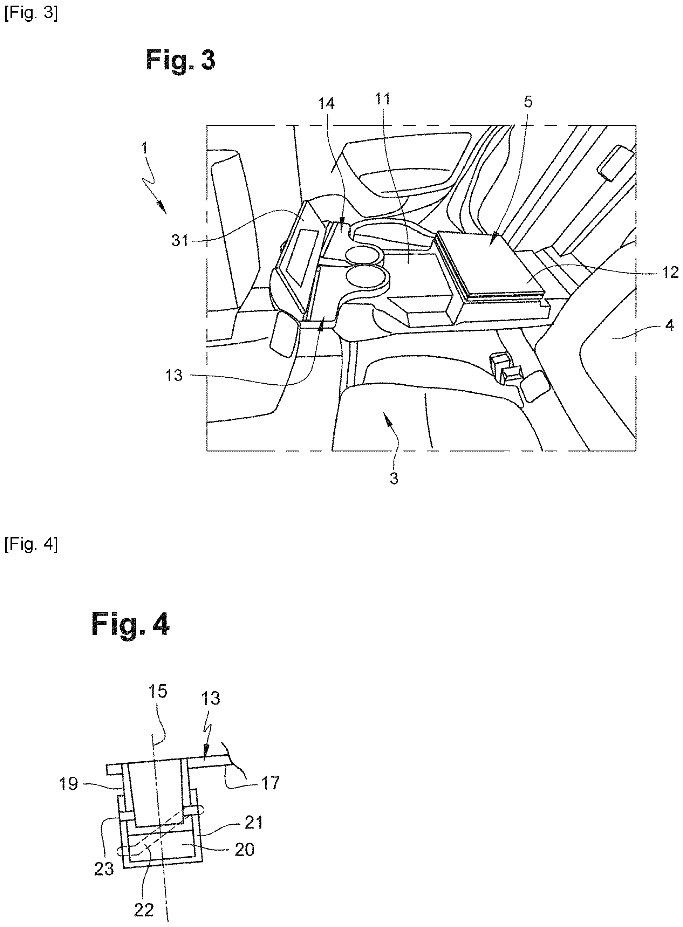

En se référant aux figures 4, 5 et 6, la paroi supérieure 11 de l'accoudoir 5 possède deux évidements 20 délimités chacun par une paroi cylindrique 21 creuse, dont le diamètre interne est légèrement supérieur au diamètre externe de la paroi cylindrique 18 d'une tablette 13, 14.

En se référant à la figure 7, les deux tablettes 13, 14 sont montées dans l'accoudoir 5 de sorte que la paroi cylindrique 19 de chacune desdites tablettes 13, 14 soit logée dans la paroi cylindrique 21 de l'accoudoir 5 délimitant un évidement 20. De cette manière, chaque tablette 13, 14 peut être mise en rotation par l'intermédiaire d'un pivotement de sa paroi cylindrique 19 dans la paroi cylindrique 21 de l'accoudoir 5 délimitant un évidement 20, pour passer de la position rangée comme illustré à la figure 7 à la position déployée comme illustré à la figure 8, ce pivotement s'effectuant sur un angle de 180° plus ou moins 5°. Les axes de rotation 15, 16 des deux tablettes 13, 14 sont constituées par leurs parois cylindriques 19.

Dans la position rangée, les deux tablettes 13, 14 sont superposées sur la paroi supérieure 11 de l'accoudoir 5 sans quasiment déborder l'une de l'autre et sans déborder de ladite paroi supérieure 11. Elles sont agencées de façon compacte. Dans cette position rangée, le corps 17 de chaque tablette 13, 14 est placé derrière la paroi cylindrique 19 servant d'axe de rotation à ladite tablette 13, 14. Comme les tablettes 13, 14 sont superposées, elles permettent de distinguer une tablette inférieure 13 et une tablette supérieure 14, ladite tablette inférieure 13 étant placée entre la tablette supérieure 14 et la paroi supérieure 11 de l'accoudoir 5.

Afin que les deux tablettes 13, 14 se retrouvent à la même hauteur lorsqu'elles sont dans la position déployée, il est nécessaire que la paroi inférieure 13 se surélève pendant son mouvement de rotation pour passer de la position rentrée à la position déployée, cette surélévation étant réalisée par un mécanisme de levage.

En se référant à la figure 4, un premier mécanisme de levage comprend une fente hélicoïdale 22 réalisée dans la paroi cylindrique 21 délimitant un évidement 20 de la surface supérieure 11, et un ergot 23 solidarisé à la paroi cylindrique 19 de la tablette inférieure 13. De cette manière, lorsque la tablette 13 va amorcer son mouvement de rotation pour passer de la position repliée à la position déployée, la paroi cylindrique 19 de la tablette inférieure 13 va pivoter autour de son axe de révolution dans la paroi cylindrique 21 de la surface supérieure 11 délimitant un évidement 20. L'ergot 23 va alors suivre le profil de la fente 22 durant cette phase de rotation, et va donc entrainer une surélévation de la tablette inférieure 13.

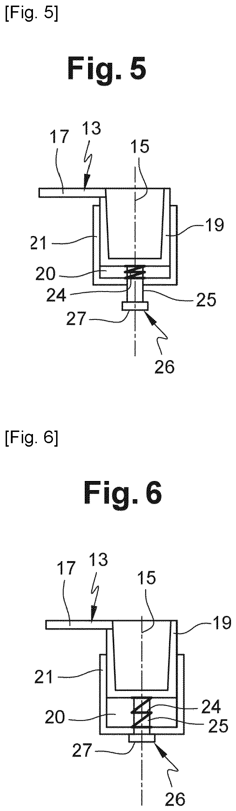

En se référant aux figures 5 et 6, un deuxième mécanisme de levage implique un ressort précontraint 24 inséré entre le fond de la paroi cylindrique 19 de la tablette 13, 14 et le fond de la paroi cylindrique 21 de la surface supérieure 11 délimitant un évidement 20. Ce ressort 24 est enroulé autour du corps 25 d'un bouton poussoir 26 dont une extrémité élargie 27 émerge sous le fond de la paroi cylindrique 21 délimitant l'évidement 20. Une pression exercée sur l'extrémité élargie 27 du bouton poussoir 26 provoque une surélévation instantanée de la tablette inférieure 13 sous l'effet du ressort 24 qui se détend.

Chaque tablette 13, 14 comprend une rainure 28, 29 traversant le corps 17 à proximité du bord arrondi et incliné 18. Lorsque les tablettes 13, 14 sont dans la position rangée, les rainures 28, 29 sont superposées et s'étendent selon un axe transversal Y du véhicule. Lorsque les tablettes 13, 14 pivotent pour atteindre la position déployée, les rainures 28, 29 pivotent également d'environ 180° pour se retrouver alignées suivant un même axe transversal Y du véhicule 1, en ménageant entre elles un espace libre qui correspond à l'espace que font lesdites tablettes 13, 14 entre elles dans la position déployée. Les rainures 28, 29 ont la même inclinaison par rapport à une direction verticale, et lorsque les tablettes 13, 14 sont dans la position déployées, elles définissent une rainure résultante qui est allongée et qui est alignée suivant le même axe, ladite rainure résultante étant discontinue en raison de l'espace existant entre lesdites tablettes 13, 14.

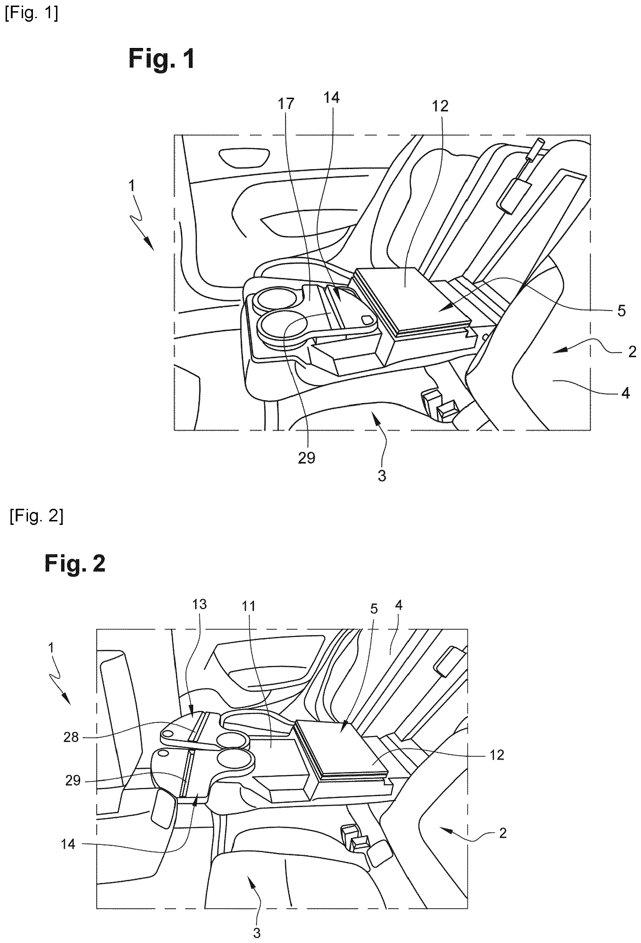

Un procédé de déploiement des tablettes 13, 14 à partir de la position rentrée comprend les étapes suivantes :
- Un occupant fait pivoter vers l'avant la tablette supérieure 14 en plaçant un doigt dans l'empreinte 30,
- Il fait ensuite pivoter la tablette inférieure 13 vers l'avant, en la saisissant au niveau de l'empreinte 30, l'accès à ladite empreinte 30 étant possible même si la tablette supérieure 14 repose sur la tablette inférieure 13. En effet, grâce à la présence du bord arrondi incliné 18 de ladite tablette supérieure 14, un occupant peut directement avoir accès à l'empreinte 30 de la tablette inférieure 13.
- Une fois que les deux tablettes 13, 14 ont pivoté vers l'avant d'un angle de 180°, les deux rainures 28, 29 se retrouvent alignées suivant un même axe transversal Y du véhicule, comme cela est illustré aux figures 2 et 8.
- L'occupant peut alors insérer une tablette électronique 31 ou un smartphone dans la rainure résultante, comme cela est illustré à la figure 3.

Il est envisageable de prévoir que chaque tablette 13, 14 présente au moins deux rainures parallèles, ayant des inclinaisons différentes par rapport à un plan vertical. De cette manière, une fois que les deux tablettes 13, 14 seront dans la position déployée, elles vont présenter deux rainures résultantes qui auront des inclinaisons différentes et qui seront aptes à soutenir une tablette électronique ou un smartphone avec une inclinaison différente. Pour cette configuration, il est supposé que les deux rainures d'une même tablette 13, 14 ont les mêmes inclinaisons que les rainures de l'autre tablette 13, 14.

## Revendications

1. Siège de véhicule (2) comprenant une assise (3) et un dossier (5) rabattable entre une position fonctionnelle pour laquelle il va servir de maintien au dos d'un occupant qui serait assis sur ledit siège (2) et une position repliée pour laquelle il s'étend dans une direction parallèle à l'assise (3), ledit dossier (3) présentant lorsqu'il est dans la position repliée une face supérieure (11) sur laquelle sont solidarisées deux tablettes support (13, 14) mobiles, les tablettes (13, 14) étant aptes à passer d'une position rentrée pour laquelle elles reposent sur la face supérieure (11) du dossier (4), à une position déployée pour laquelle elles se retrouvent côte à côte et saillent vers l'avant de ladite face (11), **caractérisé en ce que** chaque tablette (13, 14) présente au moins une rainure (28, 29) et lesdites rainures (28, 29) se retrouvant alignées l'une par rapport à l'autre lorsque les tablettes (3 ,4) sont dans la position déployée pour former un support de grande dimension.

2. Siège de véhicule selon la revendication 1, **caractérisé en ce que** lorsque les tablettes (13, 14) sont dans la position déployée, les deux rainures (28, 29) sont alignées le long du même axe.

3. Siège de véhicule selon l'une quelconque des revendications 1 ou 2, **caractérisée en ce que** les deux rainures (28, 29) sont séparées l'une de l'autre par un espace libre.

4. Siège de véhicule selon l'une quelconque des revendications 1 à 3, **caractérisé en ce que** chacune des deux tablettes (13, 14) est montée pivotante autour d'un axe solidarisé à la face supérieure (11) du dossier (4).

5. Siège de véhicule selon l'une quelconque des revendications 1 à 4, **caractérisé en ce que** chaque rainure (28, 29) possède un profil évolutif, adapté à différentes épaisseurs d'objets susceptibles d'être insérés dans lesdites rainures (28, 29).

6. Siège de véhicule selon l'une quelconque des revendications 1 à 5, **caractérisé en ce que** dans la position rentrée les deux tablettes (13, 14) sont superposées sur la face supérieure (11) de manière à distinguer une tablette inférieure (13) et une tablette supérieure (14), ladite tablette inférieure (13) étant insérée entre la tablette supérieure (14) et la face supérieure (11).

7. Siège de véhicule selon la revendication 6, **caractérisé en ce que** la tablette inférieure (13) est dotée d'un mécanisme de levage lui permettant d'arriver à la même hauteur que la tablette supérieure (14) lorsque lesdites deux tablettes (13, 14) se déploient pour parvenir à la position déployée.

8. Siège de véhicule selon la revendication 7, **caractérisé en ce que** le mécanisme de levage comporte une rainure hélicoïdale (22) appartenant à l'un des deux éléments constitués par la tablette inférieure (13) et la face supérieure (11) du dossier (4), et un ergot (23) appartenant à l'autre élément, ledit ergot (23) étant inséré dans la rainure (22).

9. Siège de véhicule selon l'une quelconque des revendications 1 à 8, **caractérisé en ce que** chaque tablette (13, 14) possède un évidement (20) apte à servir de porte-gobelet, et **en ce que** ladite au moins une rainure (28, 29) est placée devant ledit évidement (20) lorsque la tablette (13, 14) est dans la position déployée.

10. Véhicule (1) comprenant une banquette (2) trois places, convertible en deux sièges latéraux séparés par un accoudoir central (5), **caractérisé en ce que** la banquette (2) possède un siège central qui est conforme à l'une quelconque des revendications 1 à 9, l'accoudoir central (5) étant constitué par le dossier dudit siège central (2).

## Patentansprüche

1. Fahrzeugsitz (2), umfassend ein Sitzteil (3) und eine Rückenlehne (5), die zwischen einer funktionalen Position, in welcher sie dann als Abstützung für den Rücken eines Insassen dient, der auf dem Sitz (2) sitzt, und einer umgeklappten Position, in welcher sie sich in einer zum Sitzteil (3) parallelen Richtung erstreckt, klappbar ist, wobei die Rückenlehne (3), wenn sie sich in der umgeklappten Position befindet, eine Oberseite (11) aufweist, mit welcher zwei bewegliche Tragtische (13, 14) fest verbunden sind, wobei die Tragtische (13, 14) dafür ausgelegt sind, sich aus einer zurückgeschobenen Position, in welcher sie auf der Oberseite (11) der Rückenlehne (4) ruhen, in eine vorgeschobene Position zu bewegen, in welcher sie sich nebeneinander befinden und von der Seite (11) nach vorn vorstehen,
**dadurch gekennzeichnet, dass** jeder Tisch (13, 14) wenigstens eine Rille (28, 29) aufweist und die Rillen (28, 29) zueinander ausgerichtet sind, wenn sich die Tische (3, 4) in der vorgeschobenen Position befinden, um eine Abstützung mit großen Abmessungen zu bilden.

2. Fahrzeugsitz nach Anspruch 1, **dadurch gekennzeichnet, dass**, wenn sich die Tische (13, 14) in der vorgeschobenen Position befinden, die zwei Rillen (28, 29) entlang derselben Achse ausgerichtet sind.

3. Fahrzeugsitz nach einem der Ansprüche 1 oder 2, **dadurch gekennzeichnet, dass** die zwei Rillen (28, 29) durch einen freien Raum voneinander getrennt sind.

4. Fahrzeugsitz nach einem der Ansprüche 1 bis 3, **dadurch gekennzeichnet, dass** jeder der zwei Tische (13, 14) um eine Achse schwenkbar gelagert ist, die mit der Oberseite (11) der Rückenlehne (4) fest verbunden ist.

5. Fahrzeugsitz nach einem der Ansprüche 1 bis 4, **dadurch gekennzeichnet, dass** jede Rille (28, 29) ein sich erweiterndes Profil besitzt, das an verschiedene Dicken von Gegenständen angepasst ist, die in die Rillen (28, 29) einsetzbar sind.

6. Fahrzeugsitz nach einem der Ansprüche 1 bis 5, **dadurch gekennzeichnet, dass** in der zurückgeschobenen Position die zwei Tische (13, 14) auf der Oberseite (11) übereinander angeordnet sind, so dass ein unterer Tisch (13) und ein oberer Tisch (14) zu unterscheiden sind, wobei der untere Tisch (13) zwischen dem oberen Tisch (14) und der Oberseite (11) eingefügt ist.

7. Fahrzeugsitz nach Anspruch 6, **dadurch gekennzeichnet, dass** der untere Tisch (13) mit einem Hubmechanismus ausgestattet ist, der ihm ermöglicht, dieselbe Höhe wie der obere Tisch (14) zu erreichen, wenn die zwei Tische (13, 14) vorgeschoben werden, um in die vorgeschobene Position zu gelangen.

8. Fahrzeugsitz nach Anspruch 7, **dadurch gekennzeichnet, dass** der Hubmechanismus eine Spiralnut (22), die zu einem der zwei Elemente gehört, die von dem unteren Tisch (13) und der Oberseite (11) der Rückenlehne (4) gebildet werden, und einen Ansatz (23), der zu dem anderen Element gehört, aufweist, wobei der Ansatz (23) in die Nut (22) eingesetzt ist.

9. Fahrzeugsitz nach einem der Ansprüche 1 bis 8, **dadurch gekennzeichnet, dass** jeder Tisch (13, 14) eine Vertiefung (20) besitzt, die dafür ausgelegt ist, als Getränkehalter zu dienen, und dadurch, dass die wenigstens eine Rille (28, 29) vor der Vertiefung (20) angeordnet ist, wenn sich der Tisch (13, 14) in der vorgeschobenen Position befindet.

10. Fahrzeug (1), welches eine Sitzbank (2) mit drei Plätzen umfasst, die in zwei seitliche Sitze, die durch eine Mittelarmlehne (5) getrennt sind, umwandelbar ist, **dadurch gekennzeichnet, dass** die Sitzbank (2) einen Mittelsitz besitzt, welcher einem der Ansprüche 1 bis 9 entspricht, wobei die Mittelarmlehne (5) aus der Rückenlehne des Mittelsitzes (2) besteht.

## Claims

1. Vehicle seat (2) comprising a seat pan (3) and a backrest (5) that can be folded between a functional position in which it serves to support the back of an occupant seated in said seat (2) and a folded-down position in which extends in a direction parallel to the seat pan (3), said backrest (3) having, when it is in the folded-down position, an upper face (11) to which are secured two movable support tablets (13, 14),
the tablets (13, 14) being able to pass from a retracted position, in which they rest on the upper face (11) of the backrest (4), to a deployed position, in which they are positioned side-by-side and project towards the front from said face (11), **characterized in that** each tablet (13, 14) has at least one groove (28, 29) and said grooves (28, 29) are aligned with one another when the tablets (3, 4) are in the deployed position so as to form a large support.

2. Vehicle seat according to Claim 1, **characterized in that**, when the tablets (13, 14) are in the deployed position, the two grooves (28, 29) are aligned along the same axis.

3. Vehicle seat according to either one of Claims 1 and 2, **characterized in that** the two grooves (28, 29) are separated from one another by a free space.

4. Vehicle seat according to any one of Claims 1 to 3, **characterized in that** each of the two tablets (13, 14) is mounted so as to be able to pivot about an axle secured to the upper face (11) of the backrest (4) .

5. Vehicle seat according to any one of Claims 1 to 4, **characterized in that** each groove (28, 29) has a changing profile, which is suitable for various thicknesses of objects that might be inserted into said grooves (28, 29).

6. Vehicle seat according to any one of Claims 1 to 5, **characterized in that**, in the retracted position the two tablets (13, 14) are superposed on the upper face (11), in such a way that it is possible to differentiate between a lower tablet (13) and an upper tablet (14), said lower tablet (13) being inserted between the upper tablet (14) and the upper face (11).

7. Vehicle seat according to Claim 6, **characterized in that** the lower tablet (13) is provided with a lifting mechanism by means of which it can arrive at the same height as the upper tablet (14) when said two tablets (13, 14) deploy to reach the deployed position.

8. Vehicle seat according to Claim 7, **characterized in that** the lifting mechanism comprises a helical groove (22) belonging to one of the two elements consisting of the lower tablet (13) and the upper face (11) of the backrest (4), and a lug (23) belonging to the other element, said lug (23) being inserted into said groove (22).

9. Vehicle seat according to any one of Claims 1 to 8, **characterized in that** each tablet (13, 14) has a recess (20) that can serve as a cupholder, and **in that** said at least one groove (28, 29) is positioned in front of said recess (20) when the tablet (13, 14) is in the deployed position.

10. Vehicle (1) comprising a three-seat bench (2) that can be converted into two side seats separated by a central armrest (5), **characterized in that** the bench (2) has a central seat according to any one of Claims 1 to 9, the central armrest (5) consisting of the backrest of said central seat (2).
